# EUROPEAN PATENT APPLICATION

(11) **EP 2 410 758 A2**
(43) Date of publication of application: **25.01.2012**
(21) Application number: 11174952.9
(22) Date of filing: 22.07.2011
(51) Int. Cl.: H04N 21/4788, H04N 21/488, H04N 21/4786

(54) **Image Apparatus**

(30) Priority: 23.07.2010 JP 2010166279
(71) Applicant: Funai Electric Co., Ltd., Daito-shi, Osaka 574-0013 (JP)
(72) Inventor: Takenaka, Yusuke, Daito-shi, Osaka 574-0013 (JP)
(74) Representative: Grünecker, Kinkeldey, Stockmair & Schwanhäusser

(57) **Abstract**

This image apparatus (10) includes a communication portion (11) connected to a comment information server (40) through a network (30) and a control portion (12) acquiring a plurality of comment data from the comment information server at a time interval of at least a first time and controlling a display portion (14) to display the acquired plurality of comment data while switching the comment data at a second time interval shorter than the first time.

## Description

### BACKGROUND OF THE INVENTION

### Field of the Invention

The present invention relates to an image apparatus, and more particularly, it relates to an image apparatus including a control portion controlling a display portion to display information acquired from a server.

### Description of the Background Art

An image apparatus including a control portion controlling a display portion to display information acquired from a server is known in general, as disclosed in Japanese National Patent Publication Gazette No. 2002-524935, for example. The aforementioned Japanese National Patent Publication Gazette No. 2002-524935 discloses a settop box (image apparatus) displaying a message (information) acquired from a chat server on a television.

However, the settop box disclosed in the aforementioned Japanese National Patent Publication Gazette No. 2002-524935 conceivably frequently accesses the chat server to confirm updating of the message, in order to provide the message to the user of the television at proper update timing. In the settop box according to the aforementioned Japanese National Patent Publication Gazette No. 2002-524935, therefore, the chat server is disadvantageously remarkably burdened when providing the message (information) to the user at the proper update timing. If the chat server limits the frequency (interval) or the like of access by the user, the settop box cannot provide the information to the user at the proper update timing.

### SUMMARY OF THE INVENTION

The present invention has been proposed in order to solve the aforementioned problems, and an object of the present invention is to provide an image apparatus capable of reducing a burden on a server and providing information to the user at proper update timing even if the server limits the interval or the like of access by the user.

An image apparatus according to an aspect of the present invention includes a communication portion connected to a comment information server storing comment data contributed by a plurality of users through a network and a control portion acquiring a plurality of comment data, including comment information exhibiting the newest contribution time, contributed to the comment information server from the comment information server through the communication portion at a time interval of at least a first time and controlling a display portion to display the acquired plurality of comment data while switching the plurality of comment data at a second time interval shorter than the first time.

In the image apparatus according to the aspect, as hereinabove described, the control portion is formed to acquire the plurality of comment data from the comment information server at the time interval of at least the first time so that an interval of at least the first time can be ensured for communication with the comment information server, whereby the frequency of communication with the comment information server can be reduced. Thus, a burden on the server can be reduced. Further, the control portion is formed to control the display portion to display the comment data while switching the same at the second time interval shorter than the first time, whereby the control portion can control the display portion to display the comment data at a time interval proper for the user without making him/her wait beyond necessity, dissimilarly to a case of switchingly displaying the comment data at an interval of at least the first time. Thus, the image apparatus can provide information to the user at proper update timing. In addition, the communication portion communicates with the comment information server at the interval of at least the first time and the control portion controls the display portion to display the comment data while switching the same at the second time interval shorter than the first time, whereby the image apparatus can provide information to the user at the proper update timing even if the server limits the interval or the like of access by the user. Further, the control portion acquires the plurality of comment data when acquiring the comment data from the comment information server, whereby the control portion can control the display portion to switchingly display the comment data without difficulty also when the same acquires the comment data from the comment information server at the interval of at least the first time longer than the second time interval for switchingly displaying the comment data.

In the aforementioned image apparatus according to the aspect, the control portion is preferably formed to control the display portion to display all of the plurality of comment data while switching the plurality of comment data, to reacquire the plurality of comment data from the comment information server when the first time has elapsed after the acquisition of the plurality of comment data from the comment information server and to control the display portion to display updated comment information included in the plurality of comment data while switching the updated comment information at the second time interval. According to this structure, the control portion can decide the interval for communicating with the comment information server for confirming updating of the comment information in consideration of not only the first time but also display timing for the comment information displayed on the display portion, whereby the image apparatus can provide information to the user at proper timing while further reducing the burden on the server.

In this case, the comment information displayed on the display portion preferably includes a comment text and a differential time between the current time and the contribution time of the comment information, and the control portion is preferably formed to update the differential time included in the comment information displayed on the display portion not only in a case where the comment information has been updated but also in a case where the comment information has not been updated. According to this structure, the display portion updatingly displays differential time also when the same does not updatingly display the comment text dissimilarly to a case where the display portion updatingly displays the differential time only when the same updatingly displays the comment text, whereby the user can correctly recognize to what extent the comment text displayed on the display portion is old by watching the display portion.

In the aforementioned image apparatus having the display portion displaying the comment information including the comment text and the differential time, the control portion is preferably formed to update the differential time displayed on the display portion in the case where the comment information has not been updated at the second time interval identical to an updating interval for the comment information displayed on the display portion in the case where the comment information has been updated. According to this structure, the control portion can control the display portion to updatingly display the differential time in the case where the comment information has not been updated without confusing the user, dissimilarly to a case of rendering the interval of updating the differential time in the case where the comment information has not been updated longer or shorter than that of updating the differential time in the case where the comment information has been updated.

In the aforementioned image apparatus having the display portion displaying the comment information including the comment text and the differential time, the display portion is preferably provided with a comment information display region displaying the comment information, and the control portion is preferably formed to temporarily hide the comment information display region before switching the comment information displayed on the comment information display region. According to this structure, the display portion redisplays the temporarily hidden comment information display region every time the comment information is switched, whereby the user can easily recognize the timing for switching the comment information by watching the comment information display region.

In this case, the control portion is preferably formed to temporarily hide the comment information display region before switching the comment text included in the comment information displayed on the comment information display region. According to this structure, the user can easily visually recognize the timing for switching the comment text, i.e., the main contents of the comment information.

In the aforementioned image apparatus having the control portion temporarily hiding the comment information display region before switching the comment text, the control portion is preferably formed to control the display portion to display the comment text on the comment information display region in a typewriter display method of successively displaying the characters of the comment text one by one from the head when switching the comment text included in the comment information displayed on the comment information display region. According to this structure, the display portion switches the characters of the comment text one by one in the typewriter display method dissimilarly to a case of switching all characters of the comment text at once, whereby the user can easily recognize the switching of the comment text by watching the comment information display region.

In the aforementioned image apparatus having the display portion provided with the comment information display region, the display portion is preferably provided with an image display region displaying an image in addition to the comment information display region, and the control portion is preferably formed to control the display portion to display the comment information display region in a display mode not obstructing the image displayed on the image display region. According to this structure, the user can visually recognize both of the image displayed on the image display region and the comment information displayed on the comment information display region without difficulty.

In this case, the control portion is preferably formed to control the display portion to display the comment information display region while performing see-through processing on a region of the comment information display region other than regions displaying the comment text and the differential time so that the image displayed on the image display region can be seen through when controlling the display portion to display the comment information display region on the image display region in an overlapping manner. According to this structure, the user can easily visually recognize both of the image displayed on the image display region and the comment information displayed on the comment information display region without difficulty also when the display portion displays the comment information display region and the image display region in an overlapping manner.

In the aforementioned image apparatus having the display portion provided with the comment information display region, the control portion is preferably formed to control the display portion to display the comment information display region in a manner horizontally extending on the upper side or the lower side of the display portion. According to this structure, the comment information display region can easily display the comment text when the comment text included in the comment information consists of horizontally written characters.

In the aforementioned image apparatus according to the aspect, the comment data stored in the comment information server preferably include first comment information belonging to a first category and second comment information belonging to a second category, and the control portion is preferably formed to control the display portion to display the first comment information belonging to the first category and the second comment information belonging to the second category in line with each other and to repeat processing of updatingly displaying the second comment information upon a lapse of the second time interval after updatingly displaying the first comment information. According to this structure, the timing for updatingly displaying the first comment information and that for updatingly displaying the second comment information do not coincide with each other. Thus, the user can easily recognize which one of a plurality of comment data has been updated by watching the display portion even if the display portion displays the plurality of comment data.

In this case, the control portion is preferably formed to perform acquisition of the first comment information belonging to the first category from the comment information server and acquisition of the second comment information belonging to the second category from the comment information server at least at a time interval of at least the first time. According to this structure, an interval of at least the first time can be ensured for communication with the comment information server dissimilarly to a case of making communication with the comment information server for confirming updating of the first comment information and communication with the comment information server for confirming updating of the second comment information independently of each other, whereby the frequency of communication with the comment information server can be reduced. Thus, a burden on the server can be reduced also when updating of the comment information must be confirmed for each of the plurality of categories. Further, the time interval of at least the first time is ensured for the acquisition of the first comment from the comment information server and the acquisition of the second comment information from the comment information server, whereby the image apparatus can provide information to the user at proper update timing even if the comment information server limits the interval or the like of access by the user.

In the aforementioned image apparatus having the control portion controlling the display portion to display the first comment information and the second comment information in line with each other, the control portion is preferably formed to controls the display portion to display not only the first comment information and the second comment information but also the first category and the second category to which the first comment information and the second comment information belong respectively. According to this structure, the user can easily visually recognize to which category each of a plurality of comment data displayed on the display portion belongs when the display portion displays the plurality of comment data.

In the aforementioned image apparatus according to the aspect, the control portion is preferably formed to control the display portion to display the comment data acquired from the comment information server in the order of the contribution times (oldest first). According to this structure, the user can easily visually recognize the order of the oldness of the contribution times of the comment data by watching the display portion.

In the aforementioned image apparatus according to the aspect, the control portion is preferably formed to switch whether to control the display portion to display the plurality of comment data acquired from the comment information server while switching the plurality of comment data one by one or to control the display portion to display the plurality of comment data while switching the plurality of comment data by at least two at a time on the basis of an operation of the user. According to this structure, the user can easily select whether to control the display portion to display the comment data while switching the same one by one or to control the display portion to display the comment data while switching the same by at least two at a time by performing a prescribed switching operation.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a block diagram showing the structure of a television set according to an embodiment of the present invention;
Fig. 2 illustrates transition of a display screen on a display portion in a case where the user calls a comment information display function of the television set according to the embodiment of the present invention;
Fig. 3 illustrates transition of the display screen on the display portion in a case where the display portion switchingly displays comment information in a single display mode in the television set according to the embodiment of the present invention;
Fig. 4 illustrates transition of the display screen on the display portion in a case where the display portion displays a comment text in a typewriter display method in the television set according to the embodiment of the present invention;
Fig. 5 illustrates transition of the display screen on the display portion in a case where the display portion switchingly displays a differential time in the single display mode in the television set according to the embodiment of the present invention;
Fig. 6 illustrates transition of the display screen on the display portion in a case where the display portion switches categories in the single display mode in the television set according to the embodiment of the present invention;
Fig. 7 illustrates transition of the display screen on the display portion in a case where the display portion switchingly displays comment information in a multiple display mode in the television set according to the embodiment of the present invention;
Fig. 8 illustrates transition of the display screen on the display portion in a case where the display portion switchingly displays a differential time in the multiple display mode in the television set according to the embodiment of the present invention;
Fig. 9 illustrates transition of the display screen on the display portion in a case where the display portion switches categories in the multiple display mode in the television set according to the embodiment of the present invention;
Fig. 10 is a flow chart showing processing of a CPU for controlling the display portion to display comment information in the television set according to the embodiment of the present invention;
Fig. 11 is a flow chart for illustrating the details of switching display processing in the single display mode executed in the flow chart shown in Fig. 10;
Fig. 12 is a flow chart for illustrating the details of switching display processing in the multiple display mode executed in the flow chart shown in Fig. 10;
Fig. 13 is a flow chart for illustrating the details of comment information switching display processing executed in the flow chart shown in Fig. 11 or 12;
Fig. 14 is a flow chart for illustrating the details of differential time switching display processing executed in the flow chart shown in Fig. 13;
Fig. 15 illustrates transition of a display screen on a display portion in a case where the display portion switchingly displays comment information in a television set according to a first modification of the embodiment of the present invention;
Fig. 16 illustrates a display screen of a display portion in a case where the display portion displays comment information in a multiple display mode in a television set according to a second modification of the embodiment of the present invention;
Fig. 17 illustrates a display screen of a display portion in a case where the display portion displays comment information in a single display mode in a television set according to a third modification of the embodiment of the present invention;
Fig. 18 illustrates the display screen of the display portion in a case where the display portion displays comment information in a multiple display mode in the television set according to the third modification of the embodiment of the present invention; and
Fig. 19 is a block diagram showing the structure of a BD (Blu-Ray Disc) player according to a fourth modification of the embodiment of the present invention.

### DESCRIPTION OF THE PREFERRED EMBODIMENTS

An embodiment of the present invention is now described with reference to the accompanying drawings.

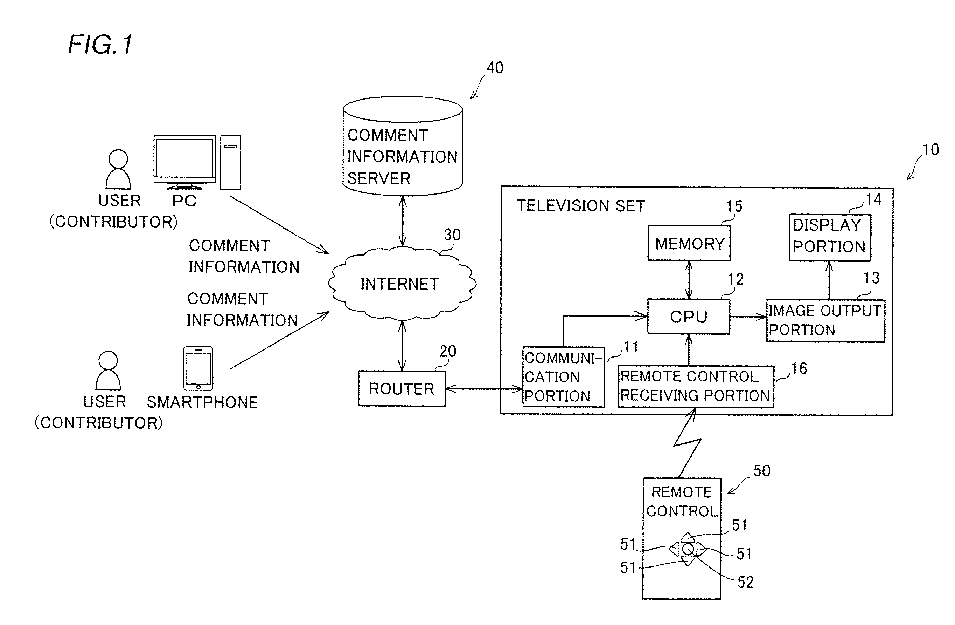

First, the structure of a television set 10 according to the embodiment of the present invention is described with reference to Figs. 1 to 9.

The television set 10 according to the embodiment of the present invention is constituted of a communication portion 11, a CPU 12, an image output portion 13, a display portion 14, a memory 15 and a remote control receiving portion 16, as shown in Fig. 1. The television set 10 is an example of the "image apparatus" in the present invention. The CPU 12 is an example of the "control portion" in the present invention.

The communication portion 11 is connected to a comment information server 40 through a router 20 and the Internet 30. The Internet 30 is an example of the "network" in the present invention. The comment information server 40 is a server storing private comment data contributed from communication terminals (PCs, smartphones etc., for example) of a plurality of users (contributors) through the Internet 30.

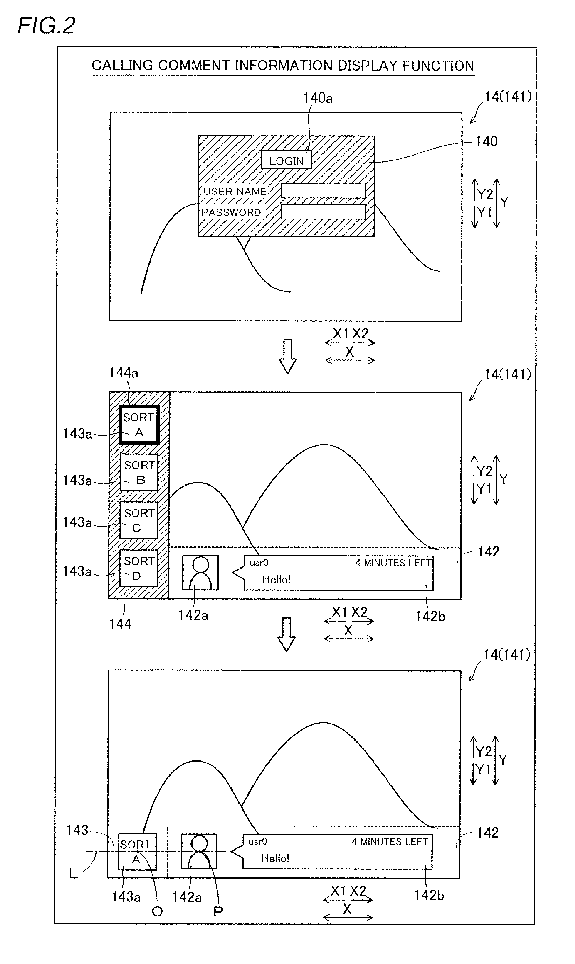

Each of the comment data is constituted of a contributor name, a comment text, the differential time between the current time and a contribution time, and a contributor icon 142a (see Figs. 2 to 9) described later. The contribution time denotes the time when the corresponding contributor has contributed comment information to the comment information server 40. The comment information is formed to be sortable into any of a plurality of categories. This categorization may be set by the user by operating his/her communication terminal (a PC or a smartphone, for example), or may be previously set in the comment information server 40. For example, a Twitter (registered trademark) server can be listed as an example of the comment information server 40. The twitter (register trademark) server is provided with a "list" function or the like as the means for the aforementioned categorization.

The CPU 12 is formed to control the overall television set 10 by transmitting a control signal. The CPU 12 is connected to the display portion 14 through the image output portion 13. Thus, the CPU 12 can control the contents displayed on the display portion 14. The memory 15 is formed to store various programs etc. run by the CPU 12.

The remote control receiving portion 16 is formed to receive an operation signal from the remote control 50. The operation signal received by the remote control receiving portion 16 is transmitted to the CPU 12. Thus, the user can control the overall television set 10 by operating the remote control 50. The remote control 50 is provided with operation buttons such as cross keys 51 and a decision key 52. With the cross keys 51 and the decision key 52 of the remote control 50, the user can perform various operations such as that for calling a comment information display function described later, that for switching a single display mode and a multiple display mode, that for switching the category and that for terminating the comment information display function.

According to this embodiment, the television set 10 is formed to have a function of acquiring any comment data from the comment information server 40 and displaying the acquired comment data on the display portion 14. More specifically, the CPU 12 of the television set 10 is formed to acquire a plurality of comment data (hereinafter assumed to be 20 newest comment data) including comment information exhibiting the newest contribution time from the comment information server 40 through the communication portion 11 at a time interval of at least a first time (hereinafter assumed to be 30 seconds). The CPU 12 is also formed to control the display portion 14 to display the 20 newest comment data acquired from the comment information server 40 while switching the same at a second time interval (hereinafter assumed to be eight seconds) shorter than 30 seconds in the order of the contribution times (oldest first).

Further, the CPU 12 is formed to control the display portion 14 to display the comment information exhibiting the newest contribution time and to reacquire the 20 newest comment data from the comment information server 40 when 30 seconds have elapsed after the acquisition of the 20 newest comment data from the comment information server 40. In addition, the CPU 12 is formed to control the display portion 14 to display the 20 newest comment data reacquired from the comment information server 40 while switching updated comment information included therein at the second time interval of eight seconds. The updated comment information denotes comment information newly contributed to the comment information server 40 after the CPU 12 has acquired the 20 newest comment data from the comment information server 40 and before the same reacquires the comment data.

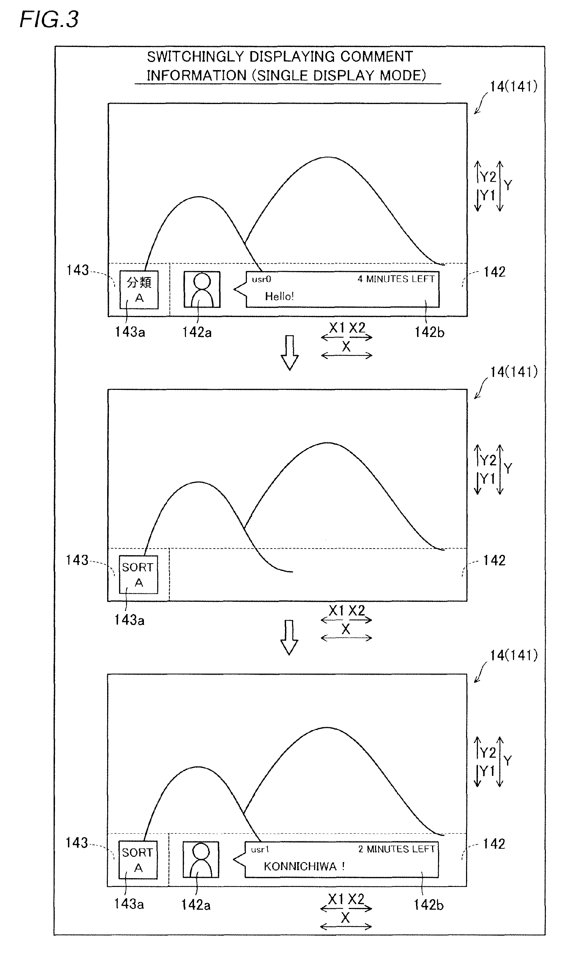

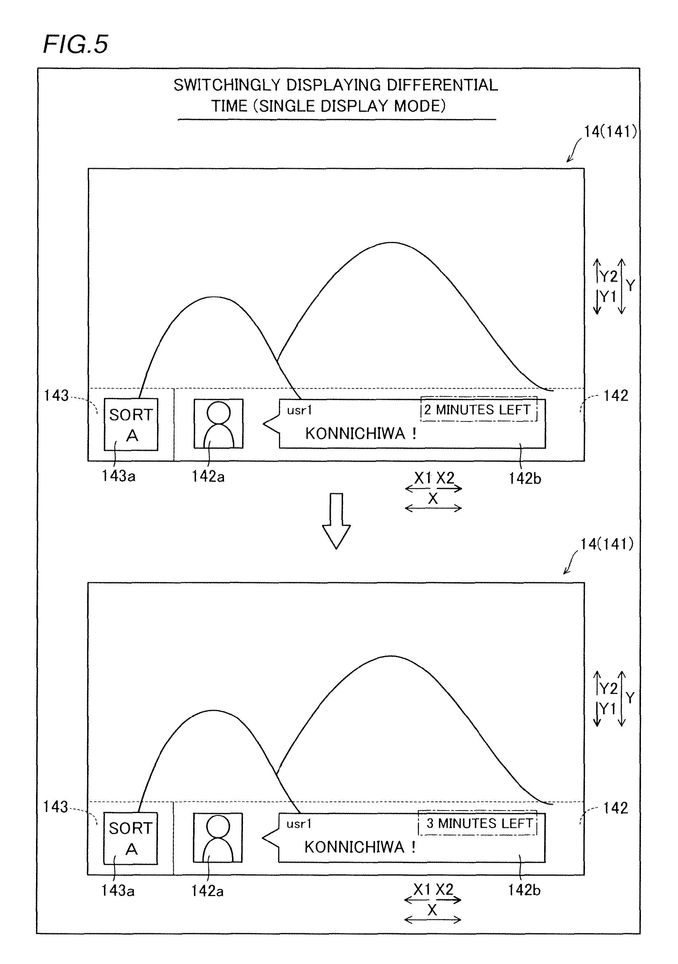

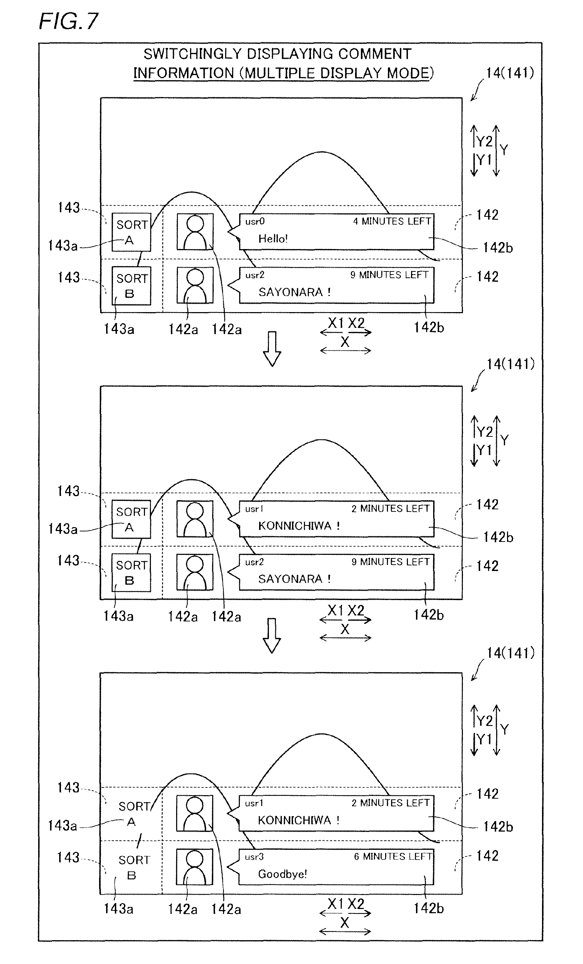

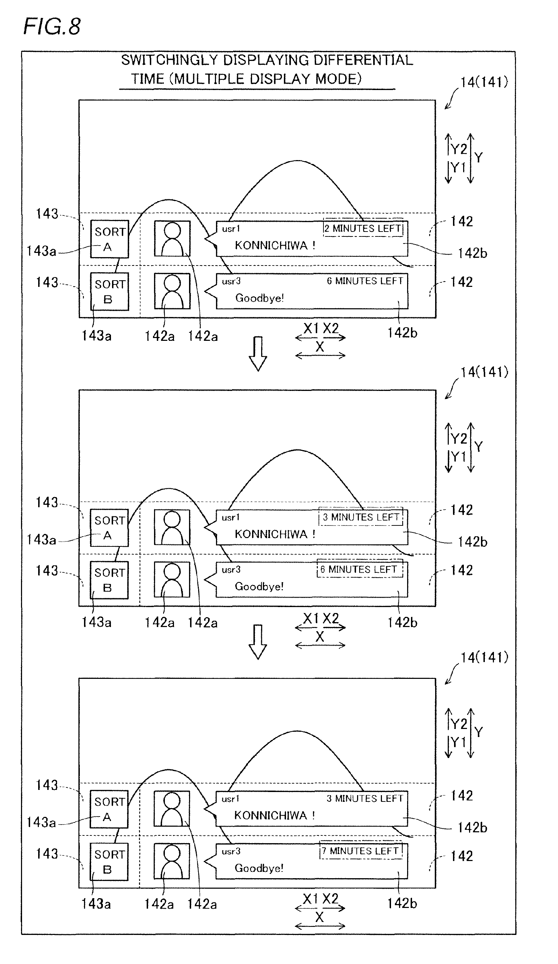

Further, the CPU 12 is formed to update the differential time included in comment information displayed on the display portion 14 not only in a case (see Figs. 3 and 7) of switchingly displaying the comment information but also in a case (see Figs. 5 and 8) of not switchingly displaying the comment information.

The display portion 14 is provided with an image display region 141 displaying/playing back images of a television broadcast or the like, as shown in Figs. 2 to 9. The image display region 141 is provided on the overall surface of the display portion 14. The display portion 14 is also provided with a comment information display region 142 displaying the comment information. The comment information display region 142 is arranged on an end portion of the lower side (along arrow Y1) of the display portion 14, to extend in the horizontal direction (direction X). The comment information display region 142 is provided therein with a balloon portion 142a displaying the comment text, the differential time and the contributor name. The comment information display region 142 displays the contributor icon 142a indicating the contributor of the comment information displayed in the balloon portion 142b on an end portion of the left side (along arrow X1) thereof. The comment information display region 142 is provided to overlap on the image display portion 141. A region of the comment information display region 142 other than those displaying the balloon portion 142b and the contributor icon 142a is subjected to see-through processing, and formed to display the images displayed/played back on the image display region 141 in a see-through manner. Thus, the comment information display region 142 can be inhibited from obstructing the images displayed/played back on the image display region 141.

A category display region 143 for displaying a category icon 143a indicating the category of the comment information displayed on the comment information display region 142 is provided on a left corner portion (along arrows X1 and Y1) of the lower side of the display portion 14. The category display region 143 is provided to be adjacent to the left side (along arrow X1) of the aforementioned comment information display region 142. As shown in Fig. 2, the category icon 143a is so displayed in the comment information display region 142 that the center point O thereof is arranged on a centerline L in the horizontal direction (direction X) passing through the center point P of the contributor icon 142a. A region of the category display region 143 other than that displaying the category icon 143a is subjected to see-through processing, similarly to that of the aforementioned comment information display region 142.

According to this embodiment, the television set 10 is so formed that the user can use the same while switching the single display mode and the multiple display mode as a display system for comment information. The user of the television set 10 switches the single display mode and the multiple display mode by operating the remote control 50 (with the cross keys 51, the decision key 52 and the like) .

Display screens displayed on the display portion 14 when the user calls the comment information display function of the television set 10 and the display portion 14 displays comment data in the single display mode and the multiple display mode are now described with reference to Figs. 2 to 9.

First, the display screen displayed on the display portion 14 when the user calls the comment information display function of the television set 10 is described with reference to Fig. 2.

When the user calls the comment information display function of the television set 10, the display portion 14 first displays a login information input portion 140 for inputting login information (a user name and a password) necessary for logging in to the comment information server 40, as shown in Fig. 2. When the user of the television set 10 inputs the login information into the login information input portion 140 and presses a login button 140a by operating the remote control 50 (with the cross keys 51, the decision key 52 and the like), the television set 10 transmits the input login information to the comment information server 40. When the comment information server 40 authenticates the received login information, the user normally logs in to the comment information server 40, and normally calls the comment information display function of the television set 10. When the memory 15 previously stores the login information, the user may not input the login information by manually operating the remote control 50 (with the cross keys 51, the decision key 52 and the like) as described above, whereby he/she can log in to the comment information server 40 by the minimum operation.

When the user normally calls the comment information display function in the aforementioned manner, the display portion 14 displays a screen displaying a category selection region (category selection menu) 144 and the comment information display region 142 as an initial screen, as shown in Fig. 2. Referring to Fig. 2, the display portion 14 displays the category selection region 144 on the end portion of the left side (along arrow X1) thereof to extend in the vertical direction (direction Y), while displaying one comment information display region 142 on the end portion of the lower side (along arrow Y1) thereof. The category selection region 144 is not subjected to see-through processing, dissimilarly to the comment information display region 142.

Referring to Fig. 2, further, the display portion 144 displays category icons 143a for four categories (sorts A, B, C and D) in the category selection region 144, while displaying a cursor 143a to surround the category icon 143a for the sort A. The comment information display region 142 displays comment information belonging to the sort A surrounded by the cursor 144a. The user of the television set 10 can switch the sort of the comment information displayed on the comment information display region 142 by moving the cursor 144a by operating the remote control 50 (with the cross keys 51, the decision key 52 and the like).

If the user of the television set 10 does not operate the remote control 50 (with the cross keys 51, the decision key 52 and the like) over a constant time in the aforementioned state where the display portion 14 displays the initial screen, the category selection region 144 gradually contracts downward (along arrow Y1) and (animatedly) displays the category icon 143a for the sort A, as shown in Fig. 2. While Fig. 2 shows the state where the display portion 14 displays only one comment information display region 142 (in the single display mode described later), the user of the television set 10 can switch the display portion 14 to a state displaying a plurality of (e.g. two) comment display regions 142 (in the multiple display mode described later) by operating the remote control 50 (with the cross keys 51, the decision key 52 and the like).

The display screen displayed on the display portion 14 when the same displays comment information in the single display mode is now described with reference to Figs. 3 to 6. The single display mode is such a display system that one comment information display region 142 switchingly displays comment information belonging to one category selected by the user, as shown in Figs. 3 to 6. The user of the television set 10 calls a function for switchingly displaying comment information in the single display mode by operating the remote control 50 (with the cross keys 51, the decision key 52 and the like) after performing the aforementioned login processing (see Fig. 2) .

The television set 10 is so formed that the comment information display region 142 updatingly displays comment data belonging to one category (sort A in Fig. 3) selected by the user one by one in the order of contribution times (oldest first) in the single display mode, as shown in Fig. 3. The television set 10 is formed to temporarily hide the comment information display region 142 before updatingly displaying a comment text in the single display mode.

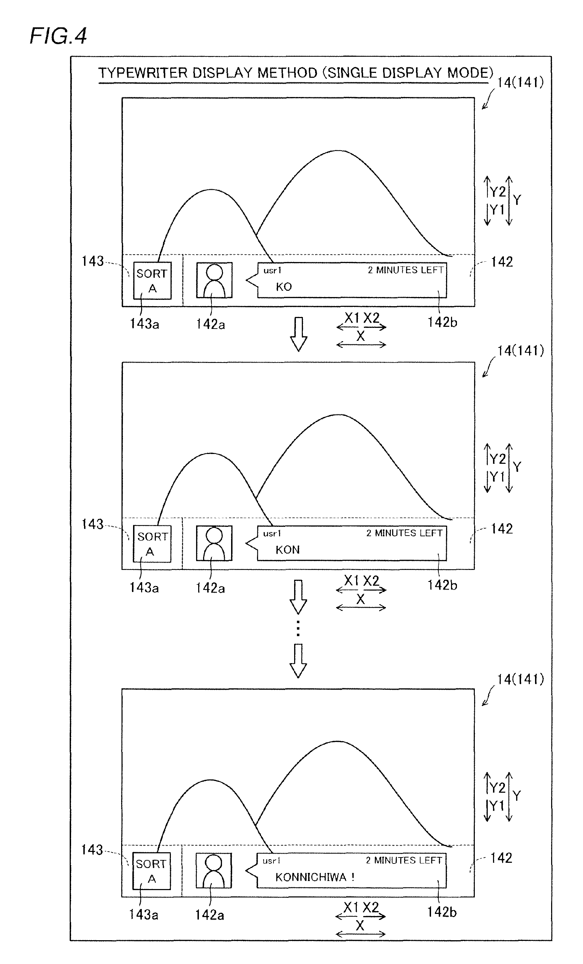

Further, the television set 10 is so formed that the comment information display region 142 gradually displays the characters of the comment text one by one from the head in a typewriter display method every time the comment text of the comment information is switched in the single mode, as shown in Fig. 4.

In addition, the television set 10 is so formed that the display portion 14 updatingly displays the differential time (character strings surrounded by one-dot chain lines in Fig. 5) also when the same does not updatingly displaying the comment text in the single display mode, as shown in Fig. 5. When updatingly displaying only the differential time, the display portion 14 does not temporarily hide the comment information display region 142, dissimilarly to the aforementioned case of updatingly displaying the comment text.

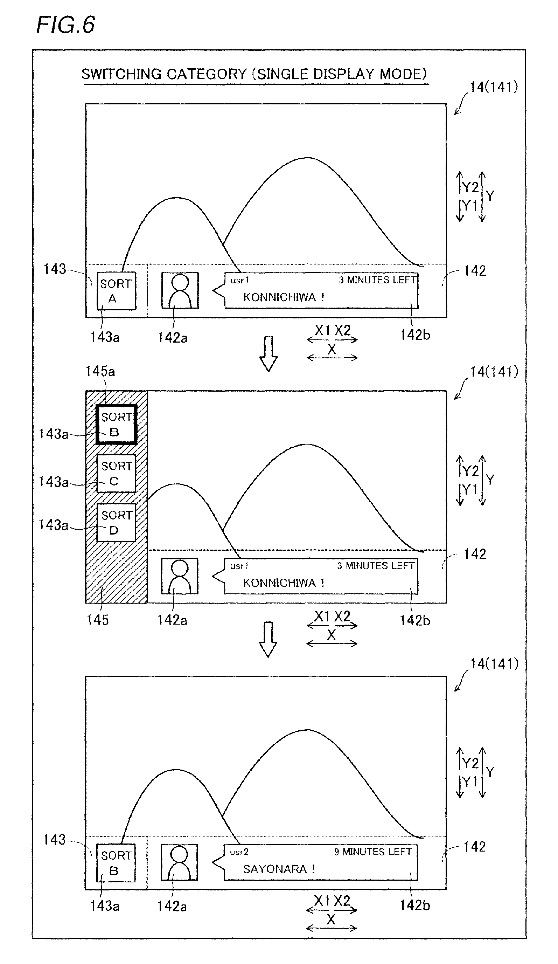

The television set 10 is so formed that the user can switch the category displayed on the display portion 14 in the single display mode. For example, the television set 10 is so formed that the user can switch the category displayed on the display portion 14 from the sort A to the sort B, as shown in Fig. 6.

The television set 10 is so formed that, when the user switches the category in the single display mode, the category display region 143 first gradually expands upward (along arrow Y2) thereby (animatedly) displaying the category selection region 145, as shown in Fig. 6. The category selection region 145 displays the category icons 143a indicating the switchable categories (sorts B, C and D). The television set 10 is so formed that the user selects/decides the switched category by moving the cursor 145a surrounding the target category icon 143a by operating the remote control 50 (with the cross keys 51, the decision key 52 and the like). The category selection region 145 is not subjected to see-through processing, dissimilarly to the comment information display region 142. Thus, the user watching the category selection region 145 can easily visually recognize the category icons 143a.

The display screen displayed on the display portion 14 in the multiple display mode is now described with reference to Figs. 7 to 9. The multiple display mode is such a display system that a plurality of (e.g. two) comment display regions 142 display comment data belonging to a plurality of (e.g. two) categories selected by the user while switching the same. The user of the television set 10 calls a function of switchingly displaying comment data in the multiple display mode by operating the remote control 50 (with the cross keys 51, the decision key 52 and the like) after performing the aforementioned login processing (see Fig. 2).

The television set 10 is so formed that the display portion 14 is provided with two comment information display regions 142, which in turn display comment data belonging to two different categories one by one in the multiple display mode of this embodiment, as shown in Figs. 7 to 9.

The television set 10 is so formed that the two comment information display regions 142 updatingly display comment data belonging to two categories (sorts A and B in Fig. 7) selected by the user one by one in the order of the contribution times (oldest first) in the multiple display mode, as shown in Fig. 7. The two comment information display regions 142 are arranged on the lower side (along arrow Y1) of the display portion 14 in line with each other in the vertical direction (direction Y). Referring to Fig. 7, the display portion 14 displays comment information belonging to the sort A upward (along arrow Y2) beyond comment information belonging to the sort B.

The television set 10 is so formed that the display portion 14 updatingly displays the comment information (belonging to the sort B in Fig. 7) displayed on the comment information display region 142 arranged on the lower side (along arrow Y1) after updatingly displaying the comment information (belonging to the sort A in Fig. 7) displayed on the comment information display region 142 arranged on the upper side (along arrow Y2) in the two comment information display regions 142 in the multiple display mode. Further, the television set 10 is so formed that the display portion 14 thereafter repeats the updating display in the aforementioned order.

The television set 10 is so formed that the display portion 14 updatingly displays the comment data belonging to the sorts A and B respectively at a time interval of eight seconds. Further, the television set 10 is so formed that the CPU 12 performs acquisition of the comment data belonging to the sorts A and B respectively from the comment information server 40 at a time interval of at least 30 seconds in the multiple display mode.

The television set 10 is so formed that the display portion 14 updatingly displays the differential time (character strings surrounded by one-dot chain lines and two-dot chain lines in Fig. 8) in the multiple display mode also when the same does not updatingly display the comment text, as shown in Fig. 8. The display portion 14 updatingly displays only the differential time in an order similar to that for the aforementioned updating display (see Fig. 7) of the comment text.

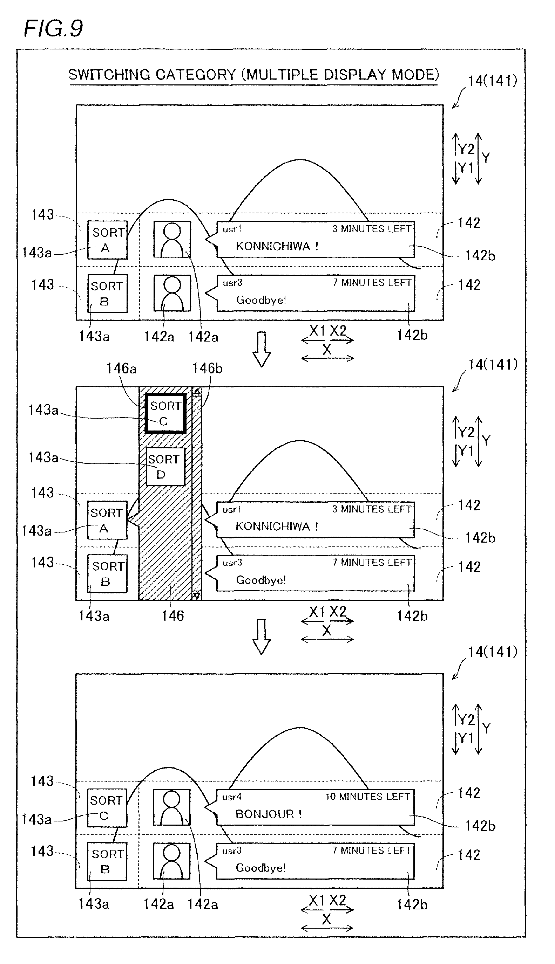

The television set 10 is so formed that the user can switch the category displayed on the display portion 14 in the multiple display mode. For example, the television set 10 is so formed that the user can switch the sort A to the sort B in the two categories (sorts A and B) displayed on the display portion 14, as shown in Fig. 9.

The television set 10 is so formed that the display portion 14 first displays a balloonlike category selection region 146 on the right side (along arrow X2) of the category icon 143a for the currently selected category (sort A), as shown in Fig. 9. The category selection region 146 displays the category icons 143a indicating the switchable categories (sorts C and D). The television set 10 is so formed that the user moves the cursor 146a surrounding the category icon 143a by operating the remote control 50 (with the cross keys 51, the decision key 52 and the like) thereby selecting/deciding the category to be switched in the category selection region 146. If the number of the category icons 143a displayed on the category selection region 146 is so large that the category icons 143a do not fit in the category selection region 146 in the vertical direction (direction Y), the user can recognize on which position the currently selected category icon 143a is located in the whole with a scroll bar 146b provided on an end portion of the right side (along arrow X2) of the category selection region 146 to extend in the vertical direction (direction Y). The category selection region 146 is not subjected to see-through processing, similarly to the category selection region 145 (see Fig. 6) in the aforementioned single display mode. Thus, the user watching the category selection region 146 can easily visually recognize the category icons 143a.

The remaining points of the multiple display mode are similar to those of the aforementioned single display mode. For example, the multiple display mode is similar to the aforementioned single display mode in a point that the region of each comment information display region 142 other than those displaying the balloon portion 142b and the contributor icon 142a are subjected to see-through processing, a point that the display portion 14 temporarily hides the comment information display region 142 every time the comment text is switched, and a point that the display region 142 displays characters in a typewriter display method when displaying the comment text.

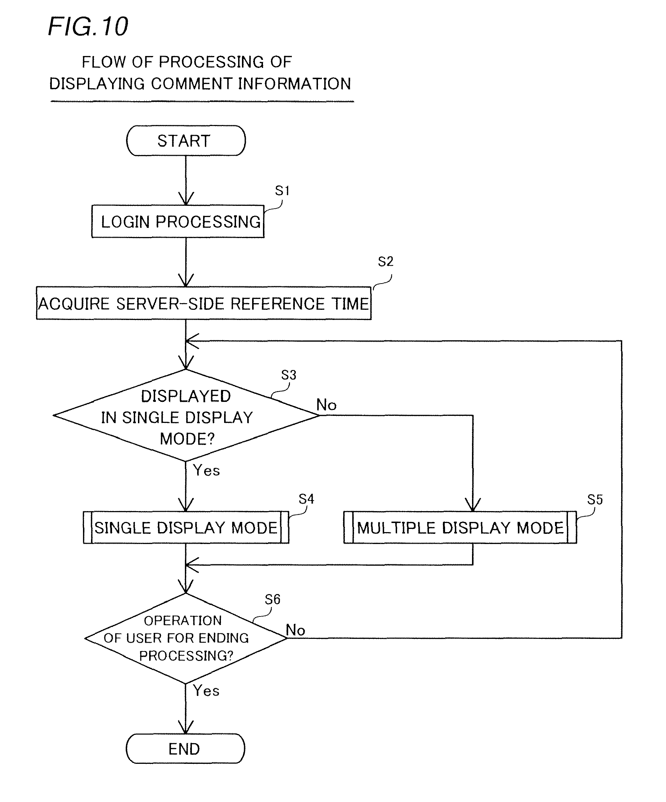

Processing of the CPU 12 for controlling the display portion 14 to display comment information in the television set 10 according to the embodiment of the present invention is now described with reference to Fig. 10.

First, the user logs in to the comment information server 40 at a step S1, and the CPU 12 advances to a step S2, as shown in Fig. 10.

Then, the CPU 12 acquires a server-side reference time from the comment information server 40 at a step S2. The server-side reference time corresponds to standard time according to GMT (Greenwich Mean Time) included in HTTP (Hyper Text Transfer Protocol) header information of the comment information server 40, for example. The CPU 12 controls the memory 15 to store the acquired server-side reference time. At this time, the CPU 12 controls the memory 15 to also store a time (hereinafter referred to as an apparatus-side reference time) measured on the side of the television set 10.

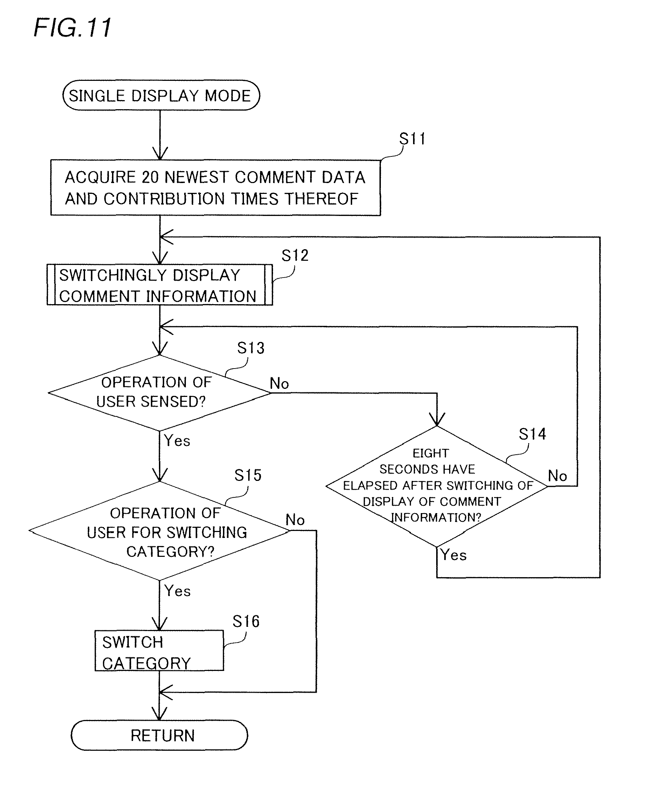

At a step S3, the CPU 12 determines whether or not the comment information is displayed in the single display mode. If determining that the comment information is displayed in the single display mode at the step S3, the CPU 12 advances to a step S4. Then, the CPU 12 executes comment information switching display processing (see Fig. 11) in the single display mode described later at the step S4, and advances to a step S6.

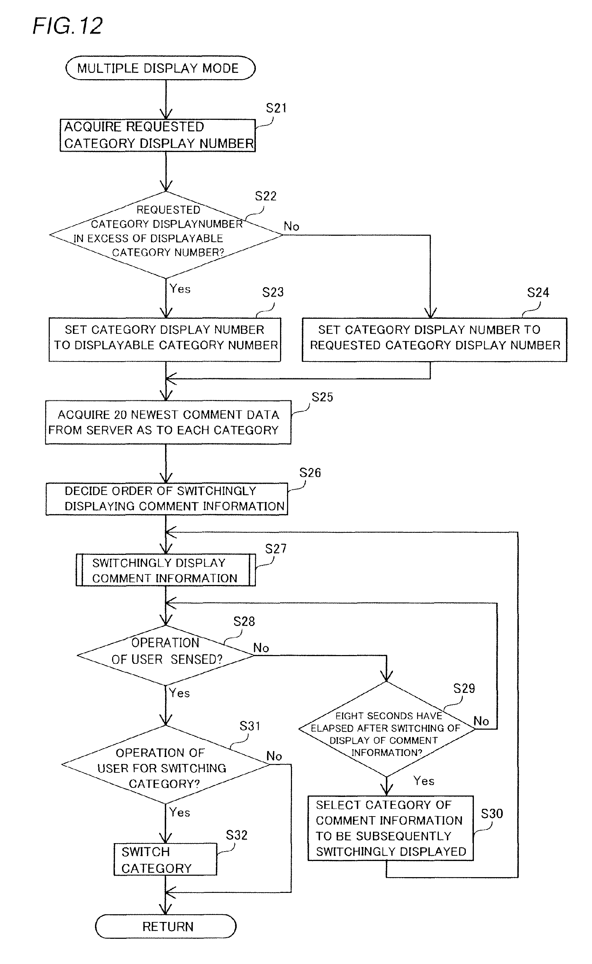

If determining that the comment information is not displayed in the single display mode at the step S3, on the other hand, the CPU 12 advances to a step S5. Then, the CPU 12 executes comment information switching display processing (see Fig. 12) in the multiple display mode described later at the step S5, and advances to the step S6.

At the step S6, the CPU 12 determines whether or not an operation (with the cross keys 51, the decision key 52 and the like of the remote control 50) of the user sensed at a step S13 (see Fig. 11) or at a step S28 (see Fig. 12) is that for ending the comment information display function. If determining that the aforementioned operation of the user is not that for ending the comment information display function at the step S6, the CPU 12 returns to the step S3. If determining that the aforementioned operation of the user is that for ending the comment information display function at the step S6, on the other hand, the CPU 12 terminates the processing.

The details of the aforementioned comment information switching display processing in the single display mode (see Figs. 3 to 6) executed at the step S4 (see Fig. 10) are now described with reference to Fig. 11.

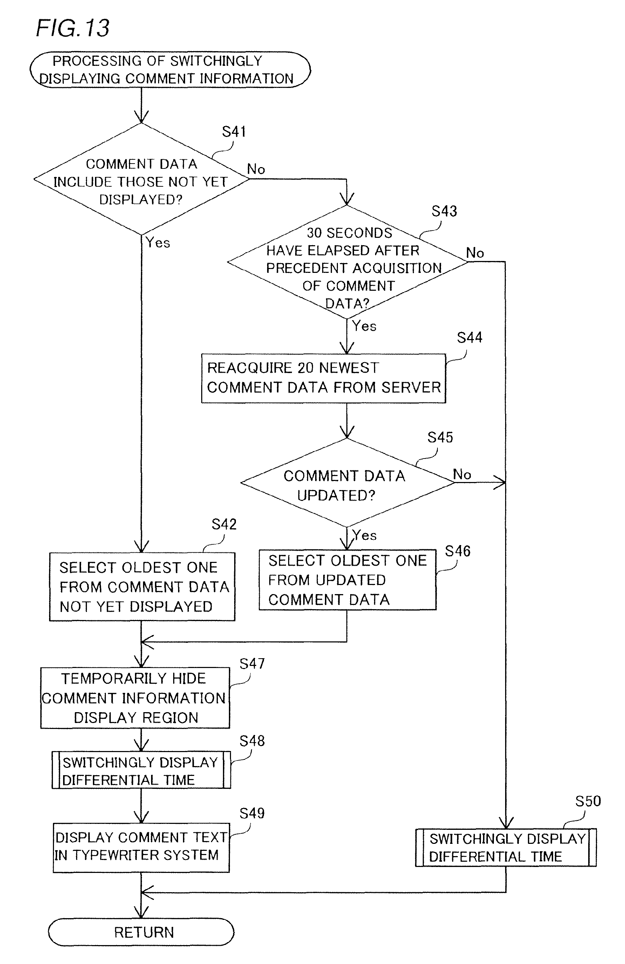

In the single display mode, the CPU 12 first acquires 20 newest comment data belonging to one category and contribution times of the 20 comment data from the comment information server 40 at a step S11, and advances to a step S12, as shown in Fig. 11. Then, the CPU 12 executes comment information switching display processing (see Fig. 13) described later at the step S12, and advances to the step S13.

At the step S13, the CPU 12 determines whether or not the remote control receiving portion 16 has sensed any operation (with the cross keys 51, the decision key 52 and the like of the remote control 50) of the user. If determining that the remote control receiving portion 16 has sensed no operation of the user at the step S13, the CPU 12 advances to a step S14.

At the step S14, the CPU 12 determines whether or not eight seconds have elapsed after the switching of the display of the comment information through the aforementioned comment information switching display processing (see Fig. 13) at the step S12. If determining that eight seconds have elapsed after the switching of the display of the comment information at the step S14, the CPU 12 returns to the aforementioned step S12. If determining that eight seconds have not yet elapsed after the switching of the display of the comment information at the step S14, on the other hand, the CPU 12 returns to the aforementioned step S13. The CPU 12 makes the determination at the step S14 by measuring the elapsed time (eight seconds) with a timer provided in the television set 10, for example.

If determining that the remote control receiving portion 16 has sensed any operation (with the cross keys 51, the decision key 52 and the like of the remote control 50) of the user at the aforementioned step S13, on the other hand, the CPU 12 advances to a step S15. At the step S15, the CPU 12 determines whether or not the operation of the user sensed at the aforementioned step S13 is a category switching operation.

If determining that the operation of the user sensed at the aforementioned step S13 is not a category switching operation, the CPU 15 terminates the processing. If determining that the operation of the user sensed at the aforementioned step S13 is a category switching operation, on the other hand, the CPU 15 advances to a step S16. At the step S16, the CPU 12 switches the category on the basis of the category switching operation determined at the aforementioned step S15, and terminates the processing.

The details of the comment information switching display processing in the multiple display mode (see Figs. 7 to 9) executed at the aforementioned step S5 (see Fig. 10) are now described with reference to Fig. 12.

In the multiple display mode, the CPU 12 first acquires a requested category display number at a step S21, and advances to a step S22, as shown in Fig. 12. The requested category display number acquired at the step S21 is a numeral indicating the number of categories the user wishes to display on the display portion 14 of the television set 10. At the step S22, the CPU 12 determines whether or not the requested category display number is in excess of a displayable category number. The displayable category number is a numeral indicating the number of categories displayable on the display portion 14 of the television set 10.

If determining that the requested category display number is in excess of the displayable category number at the step S22, the CPU 12 advances to a step S23. Then, the CPU 12 sets a category display number to the displayable category number at the step S23, and advances to a step S25. If determining that the requested category display number is not in excess of the displayable category number at the step S22, on the other hand, the CPU 12 advances to a step S24. Then, the CPU 12 sets the category display number to the requested category display number at the step S24, and advances to the step S25. The category display number set at the steps S23 and 24 is a numeral indicating the number of categories displayed on the display portion 14. Even if the requests the television set 10 to display five categories on the display portion 14 through the aforementioned steps S21 to S24, for example, the number of categories displayed on the display portion 14 is two when the display portion 14 can display only two categories.

Then, the CPU 12 acquires 20 newest comment data from the comment information server 40 as to each of the categories (two categories in this embodiment) displayed on the display portion 14 at the step S25, and advances to a step S26. At the step S25, the CPU 12 acquires not only the comment data but also the contribution times thereof, similarly to the aforementioned step S11 (see Fig. 11). Further, the CPU 12 acquires 40 comment data at once at the step S25. Thus, the CPU 12 may control the communication portion 11 to communicate with the comment information server 40 only once dissimilarly to a case of separately acquiring 20 newest comment data as to each of the two categories, whereby a burden on the comment information server 40 can be reduced.

Then, the CPU 12 decides the order of switchingly displaying two comment data on the display portion 14 at the step S26, and advances to a step S27. Then, the CPU 12 executes comment information switching display processing (see Fig. 13) described later at the step S27, and advances to the step S28.

At the step S28, the CPU 12 determines whether or not the remote control receiving portion 16 has sensed any operation (with the cross keys 51, the decision key 52 and the like of the remote control 50) of the user. If determining that the remote control receiving portion 16 has sensed no operation of the user at the step S28, the CPU 12 advances to a step S29.

At the step S29, the CPU 12 determines whether or not eight seconds have elapsed after the switching of the display of the comment information through the aforementioned comment information switching display processing (see Fig. 13) at the step S27. If determining that eight seconds have not yet elapsed after the switching of the display of the comment information at the step S29, the CPU 12 returns to the aforementioned step S28. If determining that eight seconds have elapsed after the switching of the display of the comment information at the step S29, on the other hand, the CPU 12 advances to a step S30. The CPU 12 makes the determination at the step S29 by measuring the elapsed time (eight seconds) with the timer provided in the television set 10, for example, similarly to the aforementioned determination at the step S14 (see Fig. 11). Then, the CPU 12 selects the category of the comment information to be subsequently switchingly displayed at the step S30 according to the order displayed at the aforementioned step S26, and returns to the aforementioned step S27.

If determining that the remote control receiving portion 16 has sensed any operation (with the cross keys 51, the decision key 52 and the like of the remote control 50) of the user at the aforementioned step S28, on the other hand, the CPU 12 advances to a step S31. At the step S31, the CPU 12 determines whether or not the operation of the user sensed at the aforementioned step S28 is a category switching operation.

If determining that the operation of the user sensed at the aforementioned step S28 is not a category switching operation at the step S31, the CPU 12 terminates the processing. If determining that the operation of the user sensed at the aforementioned step S28 is a category switching operation at the step S31, on the other hand, the CPU 12 advances to a step S32. At the step S32, the CPU 12 switches the category on the basis of the category switching operation at the aforementioned step S31, and terminates the processing.

The details of the comment information switching display processing executed at the aforementioned step S12 (see Fig. 11) or the aforementioned step S27 (see Fig. 12) are now described with reference to Fig. 13.

First, the CPU 12 determines whether or not the 20 newest comment data acquired from the comment information server 40 at the aforementioned step S11 (see Fig. 11) or the aforementioned step S25 (see Fig. 12) include those not yet displayed on the comment information display region 142 (see Figs. 2 to 9) at a step S41, as shown in Fig. 13. If determining that the 20 newest comment data include those not yet displayed on the comment information display region 142 at the step S41, the CPU 12 advances to a step S42. Then, the CPU 12 selects comment information exhibiting the oldest contribution time from those not yet displayed on the comment information display region 142 at the step S42, and advances to a step S47.

If determining that the 20 newest comment data do not include those not yet displayed on the comment information display region 142 at the step S41, on the other hand, the CPU 12 advances to a step S43. At the step S43, the CPU 12 determines whether or not 30 seconds have elapsed after the precedent acquisition of the comment data from the comment information server 40. The CPU 12 makes the determination at the step S43 by measuring the elapsed time (30 seconds) with another timer, different from that employed at the aforementioned step S14 (see Fig. 11) and the aforementioned step S29 (see fig. 12), provided in the television set 10, for example.

If determining that 30 seconds have elapsed after the precedent acquisition of the comment data from the comment information server 40 at the step S43, the CPU 12 advances to a step S44. Then, the CPU 12 reacquires 20 newest comment data from the comment information server 40 at the step S44, and advances to a step S45. At the step S44, the CPU 12 reacquires not only the comment data but also the contribution times thereof, similarly to the aforementioned step S11 (see Fig. 11) and the aforementioned step S25 (see Fig. 12).

At the step S45, the CPU 12 determines whether or not the comment data reacquired at the aforementioned step S44 have been updated. More specifically, the CPU 12 determines whether or not the 20 comment data reacquired at the aforementioned step S44 include comment information (updated comment information) exhibiting a contribution time newer than those of the previously acquired 20 comment data at the step S45. If determining that any comment data have been updated at the step S45, the CPU 12 advances to a step S46. Then, the CPU 12 selects comment information exhibiting the oldest contribution time from among updated comment data at the step S46, and advances to a step S47.

Then, the CPU 21 temporarily hides the comment information display region 142 at the step S47, and advances to a step S48. Then, the CPU 12 executes differential time switching display processing described later at the step S48, and advances to a step S49. At the step S49, the CPU 12 controls the comment information display region 142 to display the characters of the comment text of the comment information selected at the aforementioned step S42 or the aforementioned step S56 one by one from the head in the typewriter display method, and terminates the processing.

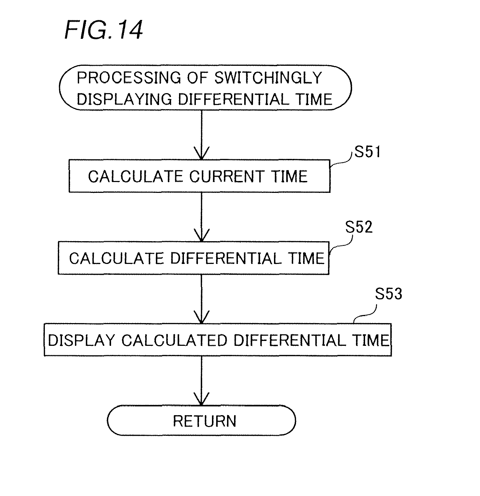

If determining that 30 seconds have not yet elapsed from the previous acquisition of the comment data from the comment information server 40 at the aforementioned step S43 and determining that the comment data have not been updated at the aforementioned step S45, the CPU 12 advances to a step S50. At the step S50, the CPU 12 executes the differential time switching display processing (see Fig. 14) described later, and terminates the processing.

The details of the differential time switching display processing executed at the aforementioned step S48 or the aforementioned step S50 (see Fig. 13) are now described with reference to Fig. 14.

First, the CPU 12 calculates the current time at a step S51, and advances to a step S52, as shown in Fig. 14. The CPU 12 calculates the current time by adding the time elapsed from the server-side reference time to the server-side reference time acquired from the comment information server 40 at the aforementioned step S2 (see Fig. 10) . The CPU 12 calculates the elapsed time by subtracting the apparatus-side reference time stored in the memory 15 at the aforementioned step S2 from an apparatus-side current time measured on the side of the television set 10.

Then, the CPU 12 calculates a differential time to be displayed on the comment information display region 142 (see Figs. 2 to 9) at the step S52, and advances to a step S53. The CPU 12 calculates the differential time by subtracting the contribution time of the comment information acquired at the aforementioned step S11 (see Fig. 11), the aforementioned step S25 (see Fig. 12) or the aforementioned step S44 (see Fig. 13) from the current time calculated at the aforementioned step S51. At the step S53, the CPU 12 controls the comment information display region 142 to display the differential time calculated at the aforementioned step S52, and terminates the processing.

According to this embodiment, as hereinabove described, the CPU 12 is formed to acquire the plurality of (20) comment data from the comment information server 40 at the time interval of at least the first time (30 seconds) so that an interval of at least 30 seconds can be ensured for communication with the comment information server 40, whereby the frequency of communication with the comment information server 40 can be reduced. Thus, the burden on the comment information server 40 can be reduced. Further, the CPU 12 is formed to control the display portion 14 to display comment information while switching the same at the second time interval (eight seconds) shorter than the first time (30 seconds), whereby the CPU 12 can control the display portion 14 to display comment information at a time interval proper for the user without making him/her wait beyond necessity. In addition, the CPU 12 controls the communication portion 11 to communicate with the comment information server 40 at an interval of at least the first time (30 seconds) and controls the display portion 14 to display comment information while switching the same at the second time interval (eight seconds) shorter than the first time (30 seconds), whereby the television set 10 can provide information to the user at proper update timing even if the comment information server 40 limits the interval or the like of access by the user. Thus, the television set 10 can provide information to the user at the proper update timing. Further, the CPU 12 acquires the plurality of (20) comment data from the comment information server 40 when acquiring comment information, whereby the same can control the display portion 14 to switchingly display comment information without difficulty also when acquiring the comment data from the comment information server 40 at the time interval of at least the first time (30 seconds) longer than the second time interval (eight seconds) for switchingly displaying comment information.

According to this embodiment, as hereinabove described, the CPU 12 is formed to control the display portion 14 to display all of the plurality of (20) comment data while switching the same, to reacquire the plurality of (20) comment data from the comment information sever 40 when the first time (30 seconds) has elapsed after the acquisition of the plurality of (20) comment data from the comment information server 40 and to control the display portion 14 to display updated comment information included in the plurality of (20) comment data while switching the same at the second time interval (eight seconds) . Thus, the CPU 12 can decide the interval of the communication with the comment information server 40 for confirming updating of comment information in consideration of not only the first time (30 seconds) but also display timing for the comment information displayed on the display portion 14, whereby the television set 10 can provide information to the user at proper timing while further reducing the burden on the comment information server 40.

According to this embodiment, as hereinabove described, the television set 10 is so formed that each of the comment data displayed on the display portion 14 includes the comment text and the differential time between the current time and the contribution time, and the CPU 12 is formed to update the differential time included in the comment information displayed on the display portion 14 not only when the comment information has been updated but also when the comment information has not been updated. Thus, the display portion 14 displays the differential time also when the same does not updatingly displays the comment text dissimilarly to a case where the display portion 14 updatingly displays the differential time only when the same updatingly displays the comment text, whereby the user can correctly recognize to what extent the comment text displayed on the display portion 14 is old by watching the display portion 14.

According to this embodiment, as hereinabove described, the CPU 12 is formed to update the differential time displayed on the display portion 14 in the case where the comment information has not been updated at the same second time interval (eight seconds) as that for the comment information displayed on the display portion 14 in the case where the comment information has been updated. Thus, the CPU 12 can control the display portion 14 to updatingly display the differential time in the case where the comment information has not been updated without confusing the user, dissimilarly to a case of rendering the interval of updating the differential time in the case where the comment information has not been updated longer or shorter than that of updating the differential time in the case where the comment information has been updated.

According to this embodiment, as hereinabove described, the comment information display region 142 for displaying comment information is provided on the display portion 14, and the CPU 12 is formed to temporarily hide the comment information display region 142 before switching the comment information displayed thereon. Thus, the display portion 14 redisplays the temporarily hidden comment information display region 142 every time the comment information is switched, whereby the user can easily recognize the timing for switching the comment information by watching the comment information display region 142.

According to this embodiment, as hereinabove described, the CPU 12 is formed to temporarily hide the comment information display region 142 before switching the comment text included in the comment information displayed thereon. Thus, the user can easily visually recognize the timing for switching the comment text, i.e., the main contents of the comment information.

According to this embodiment, as hereinabove described, the CPU 12 is formed to control the comment information display region 142 to successively display the characters of the comment text one by one from the head in the typewriter display method when switching the comment text included in the comment information displayed thereon. Thus, the comment information display region 142 switches the characters of the comment text one by one in the typewriter display method dissimilarly to a case of switching all characters of the comment text at once, whereby the user can easily recognize the switching of the comment text by watching the comment information display region 142.

According to this embodiment, as hereinabove described, the image display region 141 for displaying images is provided on the display portion 14 in addition to the comment information display region 142, and the CPU 12 is formed to control the display portion 14 to display the comment information display region 142 in a display mode not obstructing the images displayed on the image display region 141. Thus, the user can visually recognize both of the images displayed on the image display region 14 and the comment information displayed on the comment information display region 142 without difficulty.

According to this embodiment, as hereinabove described, the CPU 12 is formed to control the control portion 14 to display the comment information display region 142 while performing see-through processing on the region of the comment information display region 142 other than those displaying the comment text and the differential time so that the images displayed on the image display region 141 can be seen through when controlling the display portion 14 to display the comment information display region 142 on the image display region 141 in an overlapping manner. Thus, the user can easily visually recognize both of the images displayed on the image display region 141 and the comment information displayed on the comment information display region 142 without difficulty also when the display portion 14 displays the comment information display region 142 and the image display region 141 in an overlapping manner.

According to this embodiment, as hereinabove described, the CPU 12 is formed to control the control portion 14 to display the comment information display region 142 in a manner extending in the horizontal direction (direction X) on the lower side (along arrow Y1 thereof. Thus, the comment information display region 142 can easily display the comment text when the comment text included in the comment information consists of horizontally written characters.

According to this embodiment, as hereinabove described, the comment information server 40 is so formed that the comment data stored therein include first comment information (belonging to the sort A, for example) belonging to a first category and second comment information (belonging to the sort B, for example) belonging to a second category. On the other hand, the CPU 12 is formed to control the display portion 14 to display the comment information belonging to the sort A and the comment information belonging to the sort B in line with each other and to repeat the processing of updatingly displaying the comment information belonging to the sort B when the second time interval (eight seconds) has elapsed after the updating display of the comment information belonging to the sort A. Thus, the timing for updatingly displaying the comment information belonging to the sort A and that for updatingly displaying the comment information belonging to the sort B do not coincide with each other. Consequently, the user can easily recognize which one of the two comment data has been updated by watching the display portion 14 also when the display portion 14 displays a plurality of comment data (two comment data, i.e., the comment information belonging to the sort A and the comment information belonging to the sort B, for example).

According to this embodiment, as hereinabove described, the CPU 12 is formed to perform acquisition of the first comment information (belonging to the sort A, for example) belonging to the first category and acquisition of the second comment information (belonging to the sort B, for example) belonging to the second category from the comment information server 40 at least at a time interval of at least the first time (30 seconds). Thus, an interval of at least the first time (30 seconds) can be ensured for communication with the comment information server 40 dissimilarly to a case of making communication with the comment information server 40 for confirming updating of the comment information belonging to the sort A and communication with the comment information server 40 for confirming updating of the comment information belonging to the sort B independently of each other, whereby the frequency of communication with the comment information server 40 can be reduced. Thus, the burden on the comment information server 40 can be reduced also when updating of comment information must be confirmed for each of the plurality of categories (two categories, i.e., the sorts A and B, for example). Further, the CPU 12 performs the acquisition of the comment information belonging to the sort A from the comment information server 40 and the acquisition of the comment information belonging to the sort B from the comment information server 40 at least at the interval of at least the first time (30 seconds), whereby the television set 10 can provide information to the user at proper update timing even if the comment information server 40 limits the interval or the like of access by the user.

According to this embodiment, as hereinabove described, the CPU 12 is formed to control the control portion 14 to display not only comment information but also the category of the comment information. Thus, the user can easily visually recognize to which category the comment information displayed on the display portion 14 belongs.

According to this embodiment, as hereinabove described, the CPU 12 is formed to control the control portion 14 to display the comment data acquired from the comment information server 40 in the order of the contribution times (oldest first). Thus, the user can easily visually confirm the order of the oldness of the contribution times of the comment data by watching the display portion 14.

According to this embodiment, as hereinabove described, the CPU 12 is formed to switch whether to control the display portion 14 (in the single display mode) to display the plurality of (20) comment data acquired from the comment information server 40 while switching the same one by one or to control the display portion 14 (in the multiple display mode) to display the plurality of (20) comment data acquired from the comment information server 40 while switching the same by a least two at a time (two by two) on the basis of an operation (on the remote control 50) of the user. Thus, the user can easily select whether to control the display portion 14 to display the comment data while switching the same one by one (in the single display mode) or to control the display portion 14 to display the comment data while switching the same by a least two at a time (two by two) (in the multiple display mode) by performing a prescribed switching operation (on the remote control 50).

Although the present invention has been described and illustrated in detail, it is clearly understood that the same is by way of illustration and example only and is not to be taken by way of limitation, the spirit and scope of the present invention being limited only by the terms of the appended claims.

For example, while the CPU controls the display portion to display the plurality of comment data acquired from the comment information server while switching the same in the order of the contribution times (oldest first) in the aforementioned embodiment, the present invention is not restricted to this. According to the present invention, the television set may alternatively be so formed that the CPU controls the display portion to display the plurality of comment data acquired from the comment information server while switching the same in the reverse order of the contribution times (newest first).

While the CPU acquires 20 comment data from the comment information server in the aforementioned embodiment, the present invention is not restricted to this. According to the present invention, the CPU may alternatively acquire at least two and not more than 19 comment data or at least 21 comment data from the comment information server.

While the first time is set to 30 seconds and the second time interval is set to eight seconds in the aforementioned embodiment, the present invention is not restricted to this. According to the present invention, the first time and the second time interval may not be set to 30 seconds and eight seconds respectively, so far as the second time interval is shorter than the first time.

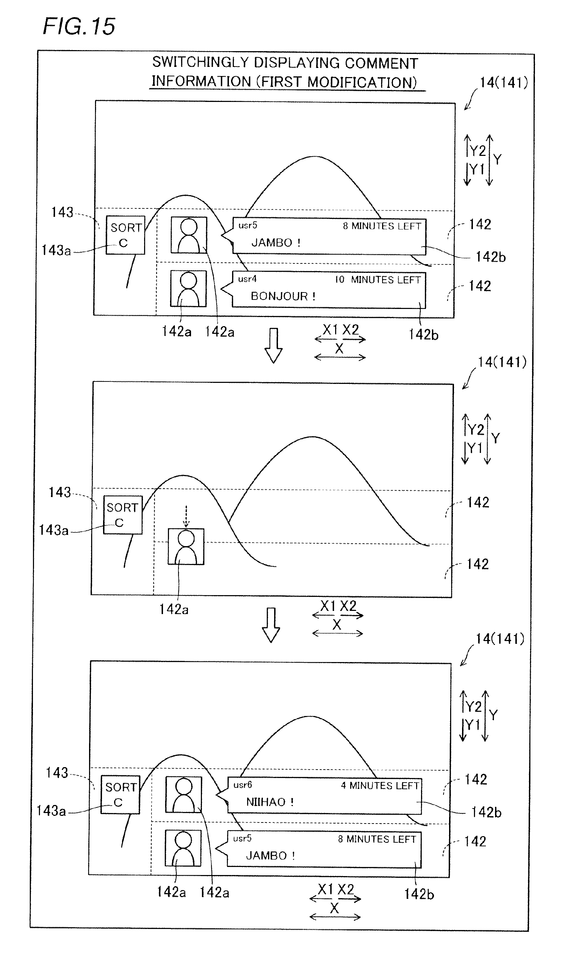

While the display portion displays single comment information with respect to one category in the aforementioned embodiment, the present invention is not restricted to this. According to the present invention, a display portion 14 may alternatively display a plurality of (two in Fig. 15) comment data with respect to one category, as in a first modification of the embodiment shown in Fig. 15. According to the first modification, the display portion 14 is so formed that an upper comment information display region 142 (along arrow Y2) included in two comment information display regions 142 switchingly displays updated comment information, as shown in Fig. 15. More specifically, the display portion 14 first temporarily hides two balloon portions 142b provided in the two comment information display regions 142 respectively. Then, a contributor icon 142a having been displayed in the upper comment information display region 142 gradually moves toward the lower comment information display region 142 (along arrow Y1). Then, the vacated upper comment information display region 142 displays the updated comment information. The display portion 14 according to the first modification switchingly displays comment information in this manner.

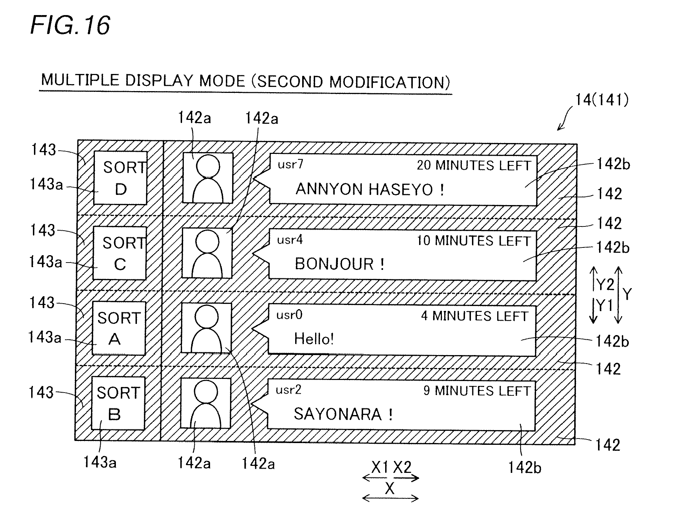

While the two comment information display regions are provided in the multiple display mode in the aforementioned embodiment, the present invention is not restricted to this. According to the present invention, four comment information display regions 142 may alternatively be provided in a multiple display mode, as in a second modification of the embodiment shown in Fig. 16, for example. According to the second modification, the four comment information display regions 142 cover the whole of an image display region 141 of a display portion 14, as shown in Fig. 16. According to the second modification, the four comment information display regions 142 are not subjected to see-through processing dissimilarly to the aforementioned embodiment, and hence the user cannot watch images of television broadcasting or the like displayed/played back on the image display region 141, but can listen to the sounds thereof.

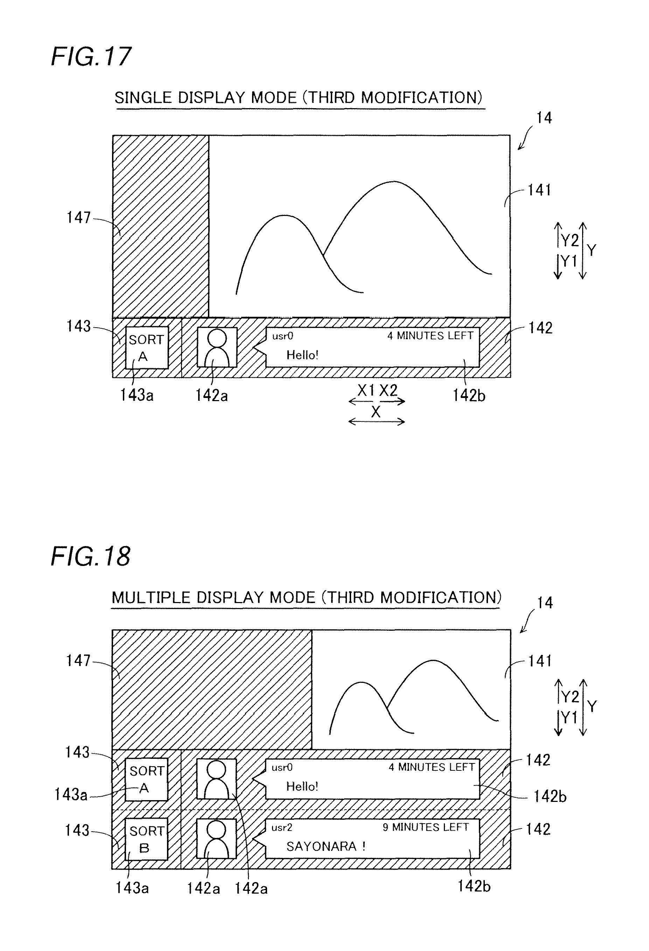

While the comment information display region 142 and the category display region 143 are provided to overlap with the image display region 141 as shown in Figs. 2 to 9 in the aforementioned embodiment, the present invention is not restricted to this. According to the present invention, an image display region 141 may alternatively display images of television broadcasting or the like in a contracted (scaled) manner while keeping ratios in the horizontal direction (direction X) and the vertical direction (Y) so that a comment information display region 142 does not overlap with the image display region 141, as in a third modification of the embodiment shown in Figs. 17 and 18. Thus, the user can visually recognize the whole of the images of television broadcasting or the like on the image display region 141 displaying the same in the contracted manner. According to the third modification, a free area 147 of a display portion 14 other than the image display region 141, the comment information display region 142 and a category display region 143 may or may not display other information.

While the comment information display region 142 is arranged on the end portion of the lower side (along arrow Y1) of the display portion 14 as shown in Figs. 2 to 9 in the aforementioned embodiment, the present invention is not restricted to this. According to the present invention, the comment information display region 142 may alternatively be arranged on an end portion of the upper side (along arrow Y2) of the display portion 14.

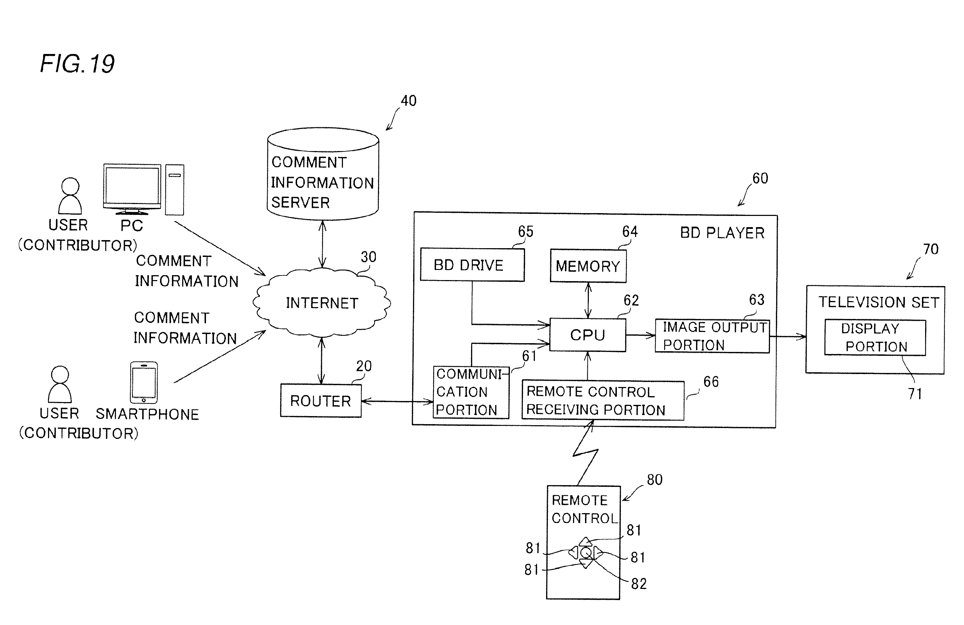

While the television set is employed as the image apparatus according to the present invention in the aforementioned embodiment, the present invention is not restricted to this. According to the present invention, an image apparatus other than the television set may alternatively be employed as the image apparatus. For example, a settop box or a BD recorder may be employed as the image apparatus. Further alternatively, a BD (Blu-Ray Disc) player 60 including a communication portion 61, a CPU 62, an image output portion 63, a memory 64 and a BD drive 65 may be employed as the image apparatus as in a fourth modification of the embodiment shown in Fig. 19, for example. The user can operate the BD player 60 with a remote control 80 having cross keys 81 and a decision key 82. The CPU 62 of the BD player 60 is formed to perform processing similar to that of the CPU 12 of the television set 10 according to the aforementioned embodiment. In other words, the CPU 62 of the BD player 60 according to the fourth modification is formed to acquire comment information from a comment information server 40 and to have a function of controlling a display portion 71 of a television set 70 connected to the BD player 60 to display the acquired comment information.

## Claims

1. An image apparatus (10, 60) comprising:
a communication portion (11, 61) connected to a comment information server (40) storing comment data contributed by a plurality of users through a network (30); and
a control portion (12, 62) acquiring a plurality of comment data, including comment information exhibiting the newest contribution time, contributed to said comment information server from said comment information server through said communication portion at a time interval of at least a first time and controlling a display portion (14, 71) to display acquired said plurality of comment data while switching said plurality of comment data at a second time interval shorter than said first time.

2. The image apparatus according to claim 1, wherein
said control portion is formed to control said display portion to display all of said plurality of comment data while switching said plurality of comment data, to reacquire said plurality of comment data from said comment information server when said first time has elapsed after the acquisition of said plurality of comment data from said comment information server and to control said display portion to display updated comment information included in said plurality of comment data while switching said updated comment information at said second time interval.

3. The image apparatus according to claim 2, wherein
said comment information displayed on said display portion includes a comment text and a differential time between the current time and the contribution time of said comment information, and
said control portion is formed to update said differential time included in said comment information displayed on said display portion not only in a case where said comment information has been updated but also in a case where said comment information has not been updated.

4. The image apparatus according to claim 3, wherein
said control portion is formed to update said differential time displayed on said display portion in said case where said comment information has not been updated at said second time interval identical to an updating interval for said comment information displayed on said display portion in said case where said comment information has been updated.

5. The image apparatus according to claim 3, wherein
said display portion is provided with a comment information display region (142) displaying said comment information, and
said control portion is formed to temporarily hide said comment information display region before switching said comment information displayed on said comment information display region.

6. The image apparatus according to claim 5, wherein
said control portion is formed to temporarily hide said comment information display region before switching said comment text included in said comment information displayed on said comment information display region.

7. The image apparatus according to claim 6, wherein
said control portion is formed to control said display portion to display said comment text on said comment information display region in a typewriter display method of successively displaying the characters of said comment text one by one from the head when switching said comment text included in said comment information displayed on said comment information display region.

8. The image apparatus according to claim 5, wherein
said display portion is provided with an image display region (141) displaying an image in addition to said comment information display region, and
said control portion is formed to control said display portion to display said comment information display region in a display mode not obstructing said image displayed on said image display region.

9. The image apparatus according to claim 8, wherein
said control portion is formed to control said display portion to display said comment information display region while performing see-through processing on a region of said comment information display region other than regions displaying said comment text and said differential time so that said image displayed on said image display region can be seen through when controlling said display portion to display said comment information display region on said image display region in an overlapping manner.

10. The image apparatus according to claim 5, wherein
said control portion is formed to control said display portion to display said comment information display region in a manner horizontally extending on the upper side or the lower side of said display portion.

11. The image apparatus according to claim 1, wherein
said comment data stored in said comment information server include first comment information belonging to a first category and second comment information belonging to a second category, and
said control portion is formed to control said display portion to display said first comment information belonging to said first category and said second comment information belonging to said second category in line with each other and to repeat processing of updatingly displaying said second comment information upon a lapse of said second time interval after updatingly displaying said first comment information.

12. The image apparatus according to claim 11, wherein
said control portion is formed to perform acquisition of said first comment information belonging to said first category from said comment information server and acquisition of said second comment information belonging to said second category from said comment information server at least at a time interval of at least said first time.

13. The image apparatus according to claim 11, wherein
said control portion is formed to control said display portion to display not only said first comment information and said second comment information but also said first category and said second category to which said first comment information and said second comment information belong respectively.

14. The image apparatus according to claim 1, wherein
said control portion is formed to control said display portion to display said comment data acquired from said comment information server in the order of the contribution times (oldest first).

15. The image apparatus according to claim 1, wherein
said control portion is formed to switch whether to control said display portion to display said plurality of comment data acquired from said comment information server while switching said plurality of comment data one by one or to control said display portion to display said plurality of comment data while switching said plurality of comment data by at least two at a time on the basis of an operation of the user.
